# EUROPÄISCHE PATENTANMELDUNG

(11) **EP 3 570 120 A1**
(43) Veröffentlichungstag der Anmeldung: **20.11.2019**
(21) Anmeldenummer: 18173327.0
(22) Anmeldetag: 18.05.2018
(51) Int. Cl.: G05B 13/02, G06F 11/36

(54) **SYSTEM ZUM DURCHFÜHREN VON XIL-TESTS VON KOMPONENTEN VON KRAFTFAHRZEUGEN**

(30) Priorität: 16.05.2018 DE 102018207565
(71) Anmelder: Ford Global Technologies, LLC, Dearborn, MI 48126 (US)
(72) Erfinder: Aslandere, Turgay, 52062 Aachen (DE); Bitsanis, Evangelos, 52062 Aachen (DE); Marbaix, Michael, 5351 Haillot (BE); Stefan, Frederic, 52072 Aachen (DE); Chevalier, Alain, 4841 Henri-Chapelle (BE)
(74) Vertreter: Dörfler, Thomas

(57) **Zusammenfassung**

Die Erfindung betrifft ein System (2) zum Durchführen von XiL-Tests von Komponenten von Kraftfahrzeugen, insbesondere von selbstfahrenden Kraftfahrzeugen, wobei das System (2) dazu ausgebildet ist, einen Modell-Datensatz (MD) repräsentativ für ein Modell einer Komponente des Kraftfahrzeugs einzulesen, den Modell-Datensatz (MD) zu klassifizieren, und einen Test-Datensatz (TS) sowie einen zum Test-Datensatz (TS) korrespondierenden Ausgangs-Datensatz (AD) unter Verwendung des Modell-Datensatzes (MD) für Test weiterer Komponenten zu bestimmen.

## Beschreibung

Die Erfindung betrifft ein System zum Durchführen von XiL-Tests von Komponenten von Kraftfahrzeugen, insbesondere von selbstfahrenden Kraftfahrzeugen.

Selbstfahrende Kraftfahrzeuge (manchmal auch autonome Landfahrzeuge genannt) sind Kraftfahrzeuge, die ohne Einflussnahme eines menschlichen Fahrers fahren, steuern und einparken können (hochautomatisiertes Fahren bzw. autonomes Fahren). Im Falle, dass keinerlei manuelles Steuern seitens eines Fahrers nötig ist, wird auch der Begriff Roboterauto verwendet. Der Fahrersitz kann unbesetzt bleiben; eventuell sind kein Lenkrad, Brems- und Gaspedal vorhanden.

Selbstfahrende Kraftfahrzeuge können mit Hilfe verschiedener Sensoren ihre Umgebung erfassen und aus den gewonnenen Informationen ihre Position und die anderer Verkehrsteilnehmer bestimmen, in Zusammenarbeit mit einer Navigationssoftware ein Fahrziel ansteuern und Kollisionen auf dem Weg dahin vermeiden.

Aufgrund der zunehmenden Anzahl von Hardware- und Software-Komponenten in selbstfahrenden Kraftfahrzeugen steigt die Anzahl von erforderlichen Tests insbesondere vorder Freigabe von Prototypen.

Es besteht also Bedarf daran, Wege aufzuzeigen, wie der Aufwand zur Durchführung derartiger Tests reduziert werden kann.

Die Aufgabe der Erfindung wird gelöst durch ein System zum Durchführen von XiL-Tests von Komponenten von Kraftfahrzeugen, insbesondere von selbstfahrenden Kraftfahrzeugen, wobei das System dazu ausgebildet ist, einen Modell-Datensatz repräsentativ für ein Modell einer Komponente des Kraftfahrzeugs einzulesen, den Modell-Datensatz zu klassifizieren, und einen Test-Datensatz sowie einen zum Test-Datensatz korrespondierenden Ausgangs-Datensatz unter Verwendung des Modell-Datensatzes für Test weiterer Komponenten zu bestimmen.

Bei den XiL-Tests kann es sich um MiL (Model-in-the-Loop), SiL (Software-in-the-Loop), PiL-Tests (Processor-in-the-Loop und/oder HiL (Hardware-in-the-Loop) handeln. MiL umfasst dabei den Aufbau von Modellen für eine Regelstrecke und ein ECU zur Verhaltenssimulation, SiL das Erstellen von Modellen in der Zielsprache des ECUs zum automatisierten Testen im Softwareentwicklungen, PiL das Testen von Prozessoren, und HiL bezeichnet ein Verfahren, bei dem ein eingebettetes System (z.B. reales elektronisches ECU oder reale mechatronische Komponente, die Hardware) über seine Ein- und Ausgänge an ein angepasstes Gegenstück angeschlossen wird.

Im Betrieb liest das System eine Mehrzahl von Modellen von Komponenten des Kraftfahrzeugs ein, die von verschiedenen Nutzern zum Durchführen von XiL-Test erstellt wurden. Das System analysiert in einem ersten Schritt diese Modelle und klassifiziert sie entsprechend ihrer Eigenschaften, z.B. nach ihrem dynamischen Übertragungsverhalten. In einem weiteren Schritt bestimmt das System Test-Datensätze für jedes Modell sowie zum jeweiligen Test-Datensatz korrespondierenden Ausgangs-Datensätze unter Verwendung des jeweiligen Modells. Somit stellt das System Test-Datensätze und Ausgangs-Datensätze bereit, die für weitere Tests verwendet werden können, indem bei weiteren Tests das zu testende System eingangsseitig mit dem jeweiligen Test-Datensatz beaufschlagt wird und die ausgangsseitigen Größen mit dem dazu korrespondierenden Ausgangs-Datensatz verglichen werden.

So kann der Aufwand zur Durchführung derartiger Tests reduziert werden.

Gemäß einer Ausführungsform ist das System selbstlernend ausgebildet. Mit anderen Worten, dass System ist zum maschinellen Lernen ausgebildet. D.h., das System erkennt Muster und Gesetzmäßigkeiten in den Modell-Datensätzen. So kann das System auch unbekannte Modell-Datensätze beurteilen. Hierzu können überwachte oder unüberwachte Lernalgorithmen verwendet werden.

Gemäß einer weiteren Ausführungsform weist das System ein künstliches neuronales Netz auf. Ein derartiges künstliches neuronales Netz besteht aus einer Mehrzahl untereinander über Kommunikationskanäle verknüpfter Verarbeitungseinheiten, den künstlichen Neuronen. In Betrieb werden Eingangsgrößen innerhalb des künstlichen neuronalen Netzes von den Neuronen i.d.R. über nicht lineare Funktionen verarbeitet und das Ergebnis über die Kommunikationskanäle an andere künstliche Neuronen weitergeleitet. Die Ausgabegrößen stellen das Ergebnis der Verarbeitungsprozesse dar. Künstliche neuronale Netze erlauben eine hochparallele Datenverarbeitung. Dadurch können sehr komplexe, auch nicht lineare Abhängigkeiten in den Eingabegrößen abgebildet werden.

Gemäß einer weiteren Ausführungsform ist das künstliche neuronale Netz ein mehrschichtiges neuronales Netz. Dabei kann es sich um ein mehrschichtiges künstliches neuronales Netz ohne Rückkopplung (feedforward) mit einer Eingabeschicht, einer oder mehreren Zwischenschichten und einer Ausgabeschicht handeln, die jeweils eine Mehrzahl künstlicher Neuronen aufweisen können. Jedem künstlichen Neuron sind Koeffizienten zugeordnet, die dessen Aktivität oder Verhalten bei Vorliegen von Eingangswerten definieren, wie z.B. die Koeffizienten einer Aktivierungsfunktion. Zum Bestimmen der jeweiligen Werte der Koeffizienten können im Rahmen einer Lern- bzw. Trainingsphase z.B. Deep Learning-Algorithmen Verwendung finden. Abweichend hiervon können auch andere künstliche neuronale Netze eingesetzt werden, wie z.B. künstliche neuronale Netze mit Rückkopplung und/oder einschichtige künstliche neuronale Netze.

Gemäß einer weiteren Ausführungsform ist das künstliche neuronale Netz ein Convolutional Neural Network. Das Convolutional Neural Networks weist einen oder mehrere Convolutional Layer, gefolgt von einem Pooling Layer auf.

Diese Einheit kann sich prinzipiell beliebig oft wiederholen, bei ausreichenden Wiederholungen spricht man dann von Deep Convolutional Neural Networks, die in den Bereich Deep Learning fallen. Durch den Pooling Layer, der überflüssige Daten verwirft, wird eine erhöhte Berechnungsgeschwindigkeit erreicht, es können tiefere Netzwerke erzeugt werden, die komplexere Aufgaben lösen, es erfolgt eine automatische Größenanpassung der rezeptiven Felder in tieferen Convolutional Layers ohne dass dafür explizit die Größe der Faltungsmatrizen erhöht werden müsste, und sie stellen eine Präventionsmaßnahme gegen Overfitting bereit.

Gemäß einer weiteren Ausführungsform beruht der Test-Datensatz und der dazu korrespondierenden Ausgangs-Datensatz auf Messungen an einer realen Vorrichtung. So können auch reale Messdaten Verwendung finden und so die Genauigkeit der Vorhersagen steigern.

Ferner gehört zur Erfindung ein Computerprogrammprodukt für ein derartiges System.

Es wird nun die Erfindung anhand einer Zeichnung erläutert. Es zeigen:
Figur 1 in schematischer Darstellung ein System zum Durchführen von XiL-Tests von Komponenten von Kraftfahrzeugen, insbesondere von selbstfahrenden Kraftfahrzeugen.
Figur 2 in schematischer Darstellung weitere Details des in Figur 1 dargestellten Systems.

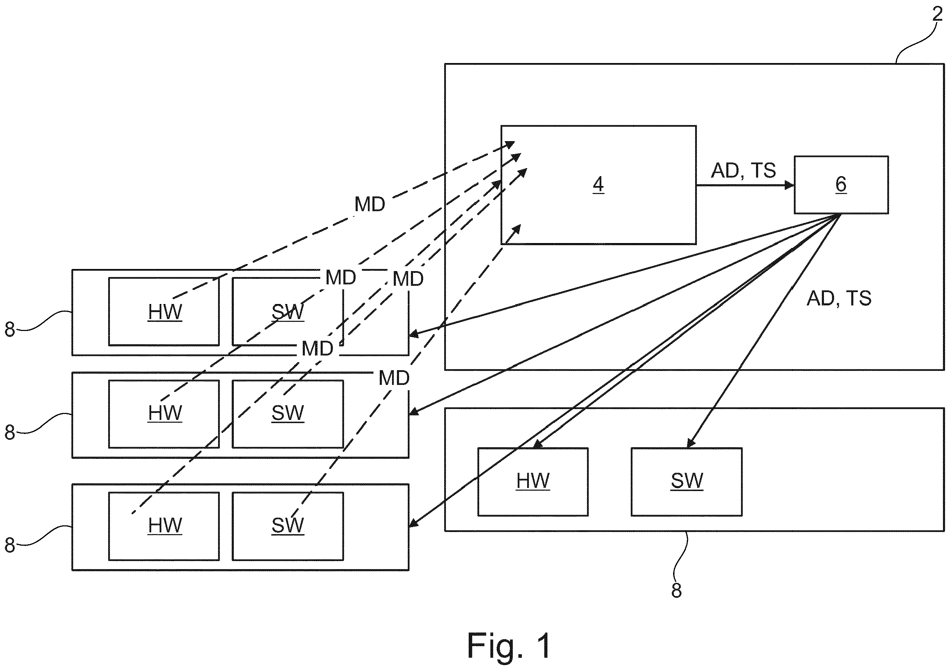

Es wird zunächst auf Figur 1 Bezug genommen.

Das System 2 ist zum Durchführen von XiL-Tests von Komponenten von Kraftfahrzeugen, insbesondere von selbstfahrenden Kraftfahrzeugen, ausgebildet.

Das Kraftfahrzeug ist im vorliegenden Ausführungsbeispiel ein PKW. Ferner ist das Kraftfahrzeug im vorliegenden Ausführungsbeispiel als selbstfahrendes Kraftfahrzeug ausgebildet, dass ohne Einflussnahme eines menschlichen Fahrers fahren, steuern und einparken kann. Hierzu weist das reale Kraftfahrzeug verschiedene Sensoren zur Umgebungserfassung auf und kann aus den gewonnenen Informationen seine Position und die anderer Verkehrsteilnehmer bestimmen, in Zusammenarbeit mit einer Navigationssoftware ein Fahrziel ansteuern und Kollisionen auf dem Weg dorthin vermeiden.

Das System 2 weist im vorliegenden Ausführungsbeispiel ein künstliches neuronales Netz 4 und eine Datenbank 6 auf.

Das System 2 wird von einem Hochleistungsrechner eines Rechenzentrums gehostet.

Das künstliche neuronale Netz 4 ist im vorliegenden Ausführungsbeispiel ein mehrschichtiges neuronales Netz ohne Rückkopplung (feedforward) mit einer Eingabeschicht, einer oder mehreren Zwischenschichten und einer Ausgabeschicht, die jeweils eine Mehrzahl künstlicher Neuronen aufweisen. Jedem künstlichen Neuron sind Koeffizienten zugeordnet, die dessen Aktivität oder Verhalten bei Vorliegen von Eingangswerten definieren, wie z.B. die Koeffizienten einer Aktivierungsfunktion. Zum Bestimmen der jeweiligen Werte der Koeffizienten können im Rahmen einer Lern- bzw. Trainingsphase z.B. Deep Learning-Algorithmen Verwendung finden. Somit ist das System 2 selbstlernend ausgebildet.

Im vorliegenden Ausführungsbeispiel ist das künstliche neuronale Netz 4 ein Convolutional Neural Network (CNN). Das Convolutional Neural Networks weist einen oder mehrere Convolutional Layer, gefolgt von einem Pooling Layer auf. Diese Einheit kann sich prinzipiell beliebig oft wiederholen, bei ausreichenden Wiederholungen spricht man dann von Deep Convolutional Neural Networks, die in den Bereich Deep Learning fallen.

Die Datenbank 6 dient der Archivierung von Daten in Form von Datensätzen, wie dies später noch detailliert erläutert wird.

Das System 2 mit dem künstlichen neuronalen Netz 4 und der Datenbank 6 kann für seine Aufgaben und Funktionen Hard- und/oder Software-Komponenten aufweisen.

Das System 2 ist dazu ausgebildet, in einem ersten Schritt z.B. über Internetverbindungen Modell-Datensätze MD einzulesen, die von verschiedenen Nutzern an verschiedenen Orten für verschiedene XiL-Tests 8 erstellt wurden.

Bei den XiL-Tests 8 im vorliegenden Ausführungsbeispiel handelt es sich um HiL-Tests. Abweichend vom vorliegenden Ausführungsbeispiel kann es sich aber auch um MiL-Tests (Model-in-the-Loop), SiL-Tests (Software-in-the-Loop) und/oder PiL-Tests (Processor-in-the-Loop handeln.

Die Modell-Datensätze MD umfassen im vorliegenden Ausführungsbeispiel jeweils ein Hardware-Modell HM und ein Software-Modell SM. Die Modell-Datensätze MD beschreiben z.B. das dynamische Verhalten einer oder mehrere Komponenten des Kraftfahrzeugs.

Das System 2 klassifiziert in einem weiteren Schritt die Modell-Datensätze MD, z.B. nach ihrem dynamischen Übertragungsverhalten, wie dies später noch detailliert erläutert wird.

Ferner erstellt das System 2 einen Test-Datensatz TS sowie einem zum Test-Datensatz TS korrespondierenden Ausgangs-Datensatz AD unter Verwendung des jeweiligen Modell-Datensatzes MD.

Der Test-Datensatz TS und der jeweilige korrespondierende Ausgangs-Datensatz AD werden dann in der Datenbank 6 archiviert.

Um einen weiteren XiL-Test 8 durchzuführen werden vom System 2 dann der jeweilige Test-Datensatz TS und der jeweilige korrespondierende Ausgangs-Datensatz AD zu dem XiL-Test 8 übertragen.

Eingangsseitig wird der weitere XiL-Test 8 mit dem jeweiligen Test-Datensatz TS beaufschlagt und die ausgangsseitigen Größen werden mit dem dazu korrespondieren Ausgangs-Datensatz AD verglichen. So kann der weitere XiL-Test 8 besonders einfach durchgeführt werden.

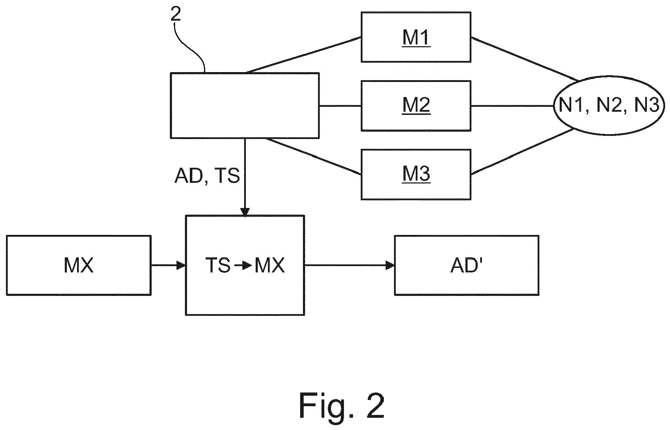

Es wird nun unter zusätzliche Bezugnahme auf Figur 2 der Betrieb des Systems 2 erläutert.

Ein erster Nutzer N1 erstellt ein erstes Modell M1 eines Federmechanismus. Das erste Modell M1 enthält eine einzige Feder und eine Krafteingabe. Der erste Nutzer N1 testet das erste Modell M1 und speichert die Ergebnisse ab.

Das System 2 liest den Modell-Datensatz MD für das erste Modell M1 ein, klassifiziert den Modell-Datensatz MD und beaufschlagt das erste Modell M1 eingangsseitig mit z.B. hunderten Werten für eine Federkonstante k der Feder und verschiedenen Werten für die Kräfte und speichert die Ergebnisse in der Datenbank 6 ab. Das System 2 erstellt dann mit Hilfe des künstlichen neuronalen Netzes 4 einen Test-Datensatz TS.

Ferner erstellt ein zweiter Nutzer N2 ein zweites Modell M2 eines weiteren Federmechanismus. Das zweite Modell M2 enthält zwei und drei Federn. Der zweite Nutzer N2 testet das zweite Modell M2 und speichert die Ergebnisse ab.

Des Weiteren liest das System 2 den Modell-Datensatz MD für das zweites Modell M2 ein, klassifiziert den Modell-Datensatz MD und beaufschlagt das zweite Modell M2 eingangsseitig mit z.B. hunderten Werten für die jeweiligen Federkonstanten k der jeweiligen Feder und speichert die Ergebnisse in der Datenbank 6 ab.

Das System 2 erstellt dann mit Hilfe des künstlichen neuronalen Netzes 4 einen Test-Datensatz TS.

Ein dritter Nutzer N3 erstellt ein drittes Modell M3 eines Federmechanismus. Das dritte Modell M3 enthält vier und eine einzige Feder. Der dritte Nutzer N3 testet das dritte Modell M3 und speichert die Ergebnisse ab.

Das System 2 liest den Modell-Datensatz MD für das dritte Modell M3 ein, klassifiziert den Modell-Datensatz MD und beaufschlagt das dritte Modell M3 eingangsseitig mit z.B. hunderten Werten für die jeweiligen Federkonstanten k der jeweiligen Feder und speichert die Ergebnisse in der Datenbank 6 ab. Das System 2 erstellt dann mit Hilfe des künstlichen neuronalen Netzes 4 einen Test-Datensatz TS.

Das System 2 ist dazu ausgebildet, aus den Modell-Datensätzen MD Modelle für ein anderes Modell MX mit einer anderen Anzahl von Federn zu bestimmen. Mit anderen Worten, dass System 2 stellt für das andere Modell MX einen weiteren Test-Datensatz TS und dazu korrespondierende Ausgangs-Datensätze AD bereit.

Es wird dann das andere Model MX eingangsseitig mit dem weiteren Test-Datensatz TS beaufschlagt und der vom anderen Modell MX gelieferte Ausgangs-Datensatz AD' bestimmt, der dann mit dem korrespondierenden Ausgangs-Datensatz AD verglichen werden kann.

Es kann auch vorgesehen sein, den Test-Datensatz (TS) und den dazu korrespondierenden Ausgangs-Datensatz (AD) durch Messungen an realen Vorrichtungen zu bestimmen. Im vorliegenden Ausführungsbeispiel wären dies Messungen an einer realen Feder oder Federbaugruppe, deren Verhalten z.B. von dem Modell M1 beschrieben wird.

Die Genauigkeit bzw. Güte des anderen Modells kann gesteigert werden, in dem die Anzahl der Modell-Datensätze MD erhöht wird.

So kann mit dem System 2 der Aufwand zur Durchführung derartiger Tests reduziert werden.

### Bezugszeichenliste

- 2: System
- 4: künstliches neuronales Netz
- 6: Datenbank
- 8: XiL-Test

- AD: Ausgangs-Datensatz
- AD': Ausgangs-Datensatz
- HM: Hardware-Modell
- MD: Modell-Datensatz
- M1: Modell
- M2: Modell
- M3: Modell
- MX: Model
- N1: Nutzer
- N2: Nutzer
- N3: Nutzer
- SM: Software-Modell
- TS: Test-Datensatz

## Patentansprüche

1. System (2) zum Durchführen von XiL-Tests von Komponenten von Kraftfahrzeugen, insbesondere von selbstfahrenden Kraftfahrzeugen, wobei das System (2) dazu ausgebildet ist, einen Modell-Datensatz (MD) repräsentativ für ein Modell einer Komponente des Kraftfahrzeugs einzulesen, den Modell-Datensatz (MD) zu klassifizieren, und einen Test-Datensatz (TS) sowie einen zum Test-Datensatz (TS) korrespondierenden Ausgangs-Datensatz (AD) unter Verwendung des Modell-Datensatzes (MD) für Tests weiterer Komponenten zu bestimmen

2. System (2) nach Anspruch 1, wobei das System (2) selbstlernend ausgebildet ist.

3. System (2) nach Anspruch 2, wobei das System (2) ein künstliches neuronales Netz aufweist.

4. System (2) nach Anspruch 3, wobei das künstliche neuronale Netz ein mehrschichtiges neuronales Netz ist.

5. System (2) nach Anspruch 4, wobei das künstliche neuronale Netz ein Convolutional Neural Network ist.

6. System (2) nach einem der Ansprüche 1 bis 5, wobei der Test-Datensatz (TS) und der dazu korrespondierenden Ausgangs-Datensatz (AD) auf Messungen an einer realen Vorrichtung beruht.

7. Computerprogrammprodukt für ein System (2) nach einem der Ansprüche 1 bis 6.
